# EUROPEAN PATENT SPECIFICATION

(11) **EP 3 184 274 B1**
(45) Date of publication and mention of the grant of the patent: **19.06.2019**
(21) Application number: 15307082.6
(22) Date of filing: 21.12.2015
(51) Int. Cl.: B29B 17/00, B29B 17/02, B29L 9/00

(54) **METHOD FOR RECYCLING A PAINT-COATED PLASTIC ARTICLE**
VERFAHREN ZUR WIEDERVERWERTUNG VON LACKBESCHICHTETEN KUNSTSTOFFARTIKELN
PROCÉDÉ DE RECYCLAGE D'UN ARTICLE EN MATIÈRE PLASTIQUE ENDUIT DE PEINTURE

(43) Date of publication of application: 28.06.2017
(73) Proprietor: Flex-N-Gate France, 25405 Audincourt (FR); Faurecia Intérieur Industrie, 92000 Nanterre (FR); FAURECIA Sièges d'Automobile, 92000 Nanterre (FR)
(72) Inventor: MICHEL, Christophe, 90000 Belfort (FR); MULHAUPT, Rolf, 79117 Freiburg (DE); FRIEDRICH, Christian, 79286 Glottertal (DE); KERSCHER, Benjamin, 79117 Freiburg (DE); MATTHES, Ulrich, 79115 Freiburg (DE); HASIS, Klaus, 77743 Neuried (DE); SZANTO, Levente, 79106 Freiburg (DE); BURON, Marie-Pierre, 25260 Montenois (FR)
(74) Representative: Lavoix

(56) References cited:
- EP-A1- 2 517 855
- JP-A- 2001 179 739
- JP-A- 2007 130 831
- US-B1- 6 663 929

## Description

The invention relates to a method for recycling a paint-coated plastic article and to a paint film decomposition agent for use in such a method. The invention for example applies for recycling plastic made vehicle parts, such as bumpers or other vehicle parts.

For producing bumpers and other external parts of terrestrial vehicles such as automotive vehicles, it is advantageous to use plastic material originating from the recycling of external parts. However, a large amount of the nowadays bumpers are coated with multiple layers of paint which cannot be recycled by means of an ordinary fusion process, since such paint is generally made of cross-linked synthetic materials. The paint particles remaining in the recycled plastic material significantly alter its mechanical properties and its ability to promote a good aspect surface and to respect the specifications for painted parts, to a point that it cannot easily be used for manufacturing new bumpers conform to all specifications.

EP-A1-0 547 249 discloses a method for reclaiming waste plastics having a paint film, in which treating liquid and pulverized waste plastics having a paint film are fed to a kneading and melting apparatus. The treating liquid comprises water, alcohol or a mixture thereof. The pulverized waste plastics are melted, kneaded and submitted to a temperature below or above a melting point of the plastics, while contacted with the treating liquid.

However, storing and handling the treating liquid can be hazardous. It requires that operators follow particular safety procedures, more particularly during the feeding step.

EP-B-0 618 254 discloses a method for recycling a bumper made of polypropylene resin, and coated with a primer paint of polyolefin chloride resin, and with a finish paint of polyester melamine resin. The painted plastic bumper is coarse-crushed by a crusher to about 1 to 10 mm cube. 25 % by weight of the coarse-crushed material is added to a virgin plastic material for forming a mixing sample. The mixing sample is then fed into a kneader heated to 180°C and is mixed for about one minute. 0.5 to 4 % by weight of paint film decomposition agent is then added to the mixed and heated sample, this agent being 2-di-n-butyl-amino-4,6-dimercapto-S-triazine. The material is kneaded at 180°C and about 70 rotor rotations per minute for about ten minutes.

The main drawback of this method is that a large quantity of virgin plastic material has to be mixed with the coarse-crushed material from the painted plastic bumper for obtaining a reliable final material. Furthermore, relatively large quantities of chemicals have to be used for degrading the paint, which can be unsafe to handle.

EP-B-0 618 254 further discloses a method for recycling a painted plastic bumper, in which said bumper is coarse-crushed into cubes of about 1 to 10 mm. A film decomposition agent is added to the coarse-crushed material which is a recycled material. The mixed material is fed into the kneader and kneaded at 200°C and 70 rotor rotations per minute for 15 minutes. Then 0.3 to 1.5 % by weight of benzotriazole is added to the coarse-crushed material, which is a 100 % recycled material.

CN-103923387 also discloses a method for recycling a polypropylene bumper with acrylic paint. This method includes a step of crushing the bumper, a step of hydrolyzing the crushed material in an autoclave, so that the paint layer hydrolysis occurs at high temperature and pressure conditions. Then the recovered material is dried in a drying chamber. The material recovered after drying is put through a filter including a twin screw extruder for extrusion pelletizing and filtering. A step of high speed mixing is then performed on the material, with adding of a coupling agent, a stabilizer, an antioxidant and polyolefin elastomer. A further step of blending the material is performed.

For recycling the material, this method requires a lot of equipment and energy. In addition, not every type of paint can be treated with such an hydrolysis.

JP-2001179739 discloses a method for recycling a paint-coated plastic article, including a step of crushing, a step of melting and kneading and a paint decomposition agent. A nucleating agent comprising benzylidene sorbitol is also added.

One of the aims of the invention is to solve these drawbacks by proposing a new and safe method for recycling a paint-coated plastic article which allows reducing the quantity of equipment, energy, chemicals and virgin plastic material to be used in recycling such an article, while removing a large quantity of paint from the plastic material. To this end, the invention relates to a method according to claim 1.

According to the invention, a thermomechanical treatment and a chemical treatment are therefore performed on the article, which improves the degradation of paint and therefore enhances the throughput of the method. Thanks to the solid alcoholic paint film decomposition agent being mixed with the raw particles while they are being melted and kneaded, without adding any virgin plastic material, the degradation of the paint is very efficient and does not require a lot of energy and equipment. In addition, a relatively small amount of solid alcoholic paint film decomposition agent is required for such degradation. One other advantage of the invention is that the alcoholic paint film decomposition agent can be chosen to meet at least some requirements in HSE (Health, Safety, Environment), ease of handling and the chemical effectiveness, as described in detail subsequently. In particular, the film decomposition agent being solid, it is particularly safe to handle while remaining efficient for the degradation of paint.

Further aspects of the invention are defined in claims 2 to 15.

Other aspects and advantages of the invention will appear upon reading the following description, given by way of example and made in reference to the appended drawing in which:

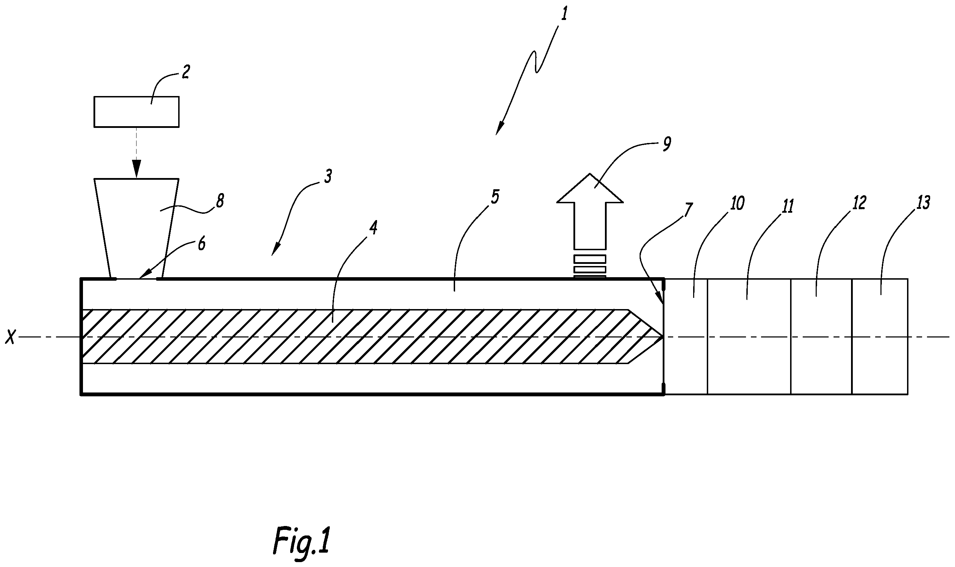

- figure 1 is a schematic longitudinal section of a device for performing the method of the invention.

The device 1 illustrated in figure 1 may be used for achieving the method for recycling a paint coated plastic article according to the invention.

The device 1 comprises an extruder 3 with an internal screw 4 mounted in rotation around a main axis X. The internal screw 4 extends inside and through a chamber 5 of the extruder 3. The extruder 3 further includes an inlet 6 for inserting material inside the chamber 5, the inlet 6 being provided towards an upstream end of the main screw 4.The extruder 3 also comprises an outlet 7 provided towards a downstream end of the screw 4, opposite the upstream end, for extracting material from the chamber 5. The rotation of the screw 4 drags and kneads the material inserted through the inlet 6, all along chamber 5 in a direction extending along the main axis X, to the outlet 7.

The chamber 5 is further provided with a heater, not illustrated, for heating the material contained inside the chamber 5 to a processing temperature. The heater is adapted for heating the chamber 5 from the inlet 6 to the outlet 7. The heater is for example adapted to at least heat the material conveyed by the internal screw 4 assuming that this internal screw could be optionally thermo-regulated by an adapted device. The inlet 6 is provided radially relative to the main axis X, meaning that the inlet 6 extends along a direction substantially perpendicular to the main axis X, at an upper part of the chamber 5 so that the material introduced in the inlet 6 falls into the chamber 5 under the action of gravity. A funnel 8 of the device 1 is mounted on the inlet 6 for feeding the chamber 5. Over the funnel 8, a distributor 2 of the device 1 is positioned for feeding the funnel 8 with material. The distributor 2 allows dosing of the material to be fed in the funnel 8.

The article to be recycled in the device 1 is for example an external part of an automotive vehicle, such as, for example, a bumper made of plastic material. The plastic material of the article comprises a majority of polyolefin, for example polypropylene copolymer, which can be charged or not with talc or other components. The plastic material comprises for example between 0 and 30 % in weight of talc. This article to be recycled is mainly made of plastic material, which forms at least the majority of the weight of the article and preferably forms the core part of said article.

This plastic material of the article is coated, for example on its external surface, or at least a part of it, with at least one layer of paint. Therefore, the article forms for example a coated or painted bumper. The coating of the article is made of at least one layer of paint, or multiple superposed layers of paint or other coating material, for example a primer layer and a layer of paint applied on the primer layer. Furthermore, different types of paints can be applied on the plastic material of the article. According to the present patent application, the term "paint" is meant to encompass any type of coating for decorating and/or protecting the plastic material, including varnish, resin and lacquer. The method of the invention is especially meant for recycling articles with a layer of thermosetting coating. For example, the coat of paint includes polyurethane, which cannot be melted due to its cross linked structure.

In a first step of the method, the article to be recycled is crushed, for forming raw particles, some of which can entirely be made of the plastic material, and at least some other of which contain a portion of the coat of paint of the article. The crushing of the article of paint-coated plastic material leads to the creation of small paint particles. This crushing step can be achieved for example with a conventional plastic crusher. For example, the average mean diameter of the raw particles could be comprised in the range 8 mm to 14 mm, with a preferred value below 10 mm.

The raw particles produced by crushing the article are then transferred to the distributor 2, which is made for dosing and dropping the raw particles into the funnel 8 so that they enter the chamber 5 via the inlet 6. The processing temperature applied to the chamber 5 is high enough to induce melting of the plastic material of the raw particles inside the chamber 5 while they advance towards the outlet 7 under the action of the internal screw. Preferably, the length of the screw 4 is greater than or equal to 50 to 60 times its diameter so that the conveyed material remains for a relatively long duration inside the chamber 5 while progressing and being kneaded from the inlet 6 to the outlet 7. Alternatively, a conventional compounder can be implemented, this compounder being provided with a screw having a length equal to a value comprised between 42 and 46 times the value of its diameter, with specific screw profile. As a consequence, the length of the screw 4 may be greater than or equal to 42 to 60 times its diameter. The device 1 is adapted for the raw particles and the reactive mixture, which will be described subsequently, to be moved from the inlet 6 to the outlet 7 for a duration comprised between 1 and 10 minutes.

The distributor 2 is also meant for dosing and dropping a solid alcoholic paint film decomposition agent into the funnel 8 so that it enters the inlet 6 of the chamber 5. Alternatively, the solid alcoholic paint film decomposition agent could be fed into the chamber via another inlet separate from inlet 6 and also provided towards the upstream end of the internal screw 4. The solid alcoholic paint film decomposition agent is adapted for degrading the paint of the article. By paint decomposition agent, it is meant a material having the ability to decompose paint when mixed with said paint. Preferably, the alcoholic paint film decomposition agent comprises an alcohol. Preferably, the alcoholic paint film decomposition agent is chosen to be solid at room temperature, for example 23°C, so that it can be safely and easily handled, without the risk for an operator to inhale vapors as in the case of the use of a liquid agent. Preferably, the alcoholic paint film decomposition agent is chosen to be, or to become, liquid or pasty at a temperature greater than or equal to the processing temperature applied in the chamber 5 by the heater, for the raw particles to melt. The solid alcoholic paint film decomposition agent becomes liquid or at least pasty during melting of the raw particles. The solid alcoholic decomposition agent can be chosen to become liquid before the raw particles during the process. According to another embodiment, the solid alcoholic paint film decomposition agent can be chosen to remain solid at the processing temperature such that the decomposition agent remains solid during the melting and kneading step. The solid alcoholic paint film decomposition agent is optionally hydrated for improving its efficiency in degrading the particles of paint.

Preferably, the alcoholic paint film decomposition agent is in the form of flakes or powder or granules (identified as "flakes" hereafter) when in the distributor 2 for easier dosage. For example, solid alcoholic paint film decomposition agent includes at least one of the following: di-trimethylolpropane, sorbitol, 1,6-hexanediol, trimethylolpropane, pentaerythritol, and the chemical equivalents thereof and the derivatives thereof, a mix or a premix of at least some of these alcohols. In particular, the aforementioned alcohols are solid at room temperature.

The alcoholic paint film decomposition agent may meet some or all requirements in HSE, ease of handling and the chemical effectiveness since it is in solid form at room temperature, in liquid form at processing temperature and above, since it is not corrosive, not harmful, not toxic. Lastly, these requirements can be met since the alcoholic paint film decomposition agent has a specific molecular structure with at least two hydroxyl groups or more.

Between substantially 1 and 6 % in weight of solid alcoholic paint film decomposition agent relative to the weight of the dosed raw particles is inserted into the chamber 5 by the distributor 2. In the funnel 8, or preferably in the chamber 5, the solid alcoholic paint film decomposition agent is mixed with the raw particles for forming a reactive mixture. When the alcoholic paint film decomposition agent is provided in a solid form at ambient temperature, the alcoholic paint film decomposition agent and the raw particles are still solid in the funnel 8 and at the vicinity of the inlet 6, so that they do not blend together yet. The raw particles and the flakes of alcoholic paint film decomposition agent are melted by the action of the heater of the chamber 5 and kneaded at the same time by the main screw 4 so that the reactive mixture is formed within the chamber, with the raw particles blending with each other and with the alcoholic paint film decomposition agent. While progressing inside the chamber 5, the reactive mixture becomes liquid or at least pasty or viscous. The combined action of the screw 4 and of the heater allows mixing of the reactive mixture. At this stage, the paint particles contained in the mixture may still be solid due to their thermosetting nature, even though all the other particles are melting. During the progression of the mixture in the chamber 5 towards the outlet 7, the alcoholic paint film decomposition agent reacts with the particles of paint contained in the reactive mixture, or at least a portion of it, to create degraded paint particles and other products of the chemical reaction.

Alternatively, the alcoholic paint film decomposition agent can be added to the raw particles at a later stage in the chamber 5, where the plastic material of the raw particles has already melted, at least partially. In this case, the alcoholic paint film decomposition agent starts to melt after the raw particles have started melting themselves. In this embodiment, the solid alcoholic paint film decomposition agent is introduced into the chamber 5 between the inlet 6 and the outlet 7.

The reactive mixture is submitted to a processing temperature for example higher than 130°C, and preferably higher than 180°C in the chamber 5, which is over the polypropylene melting temperature. For example, the processing temperature is approximately 200°C for increasing the efficiency of the degradation of paint by the alcoholic paint film decomposition agent. Other processing temperatures may be chosen depending on the nature of the plastic material of the article to be recycled. In other words and more generally, the processing temperature is chosen to be greater than or equal to the melting temperature of the plastic material of the article to be recycled.

Advantageously, a catalyst agent is also dosed and dropped into the funnel 8 by the distributor 2. In this manner, the catalyst agent is mixed with the reactive mixture before being melted and kneaded with it. Alternatively, the catalyst agent can be added in the chamber 5 at a stage where the raw particles are already melted. For example, the catalyst agent comprises at least one of the following: zinc acetate, magnesium acetate, tin(II) 2-ethylhexanoate, sodium acetate, potassium acetate and the chemical equivalents thereof. The zinc acetate is preferably dihydrate, and the magnesium acetate is preferably tetrahydrate. However, any appropriate corresponding hydrated or anhydrous acetates may be used instead, depending on the context.

Between substantially 0.1 and 0.75 % in weight of catalyst agent compared to the weight of the raw particles is added by the distributor 2 to the reactive mixture through the inlet 6, or at a later stage. A stabilizing agent or polyolefin, or a stabilizing agent and polyolefin can also be added to the reactive mixture before or while the raw particles are being melted in the chamber 5. In particular, the distributor 2 can be adapted for dosing and dropping into the funnel 8 such stabilizing agent and polyolefin. Preferably, the polyolefin is not polypropylene, and may be an elastomer. For example, the stabilizing agent can be one of pentaerythritol tetrakis(3-(3,5-di-tert-butyl-4-hydroxyphenyl)propionate and tris (2,4-di-tert-butylphenyl) phosphite, for example commercially available respectively under the names of irganox® 1010 and irgafos® 168. Other stabilizing agents may be used instead of the ones cited hereinabove, depending on the application of the invention.

According to an embodiment, chamber 5 is also provided with a degassing device 9, provided radially relative to the axis X in the vicinity of the outlet 7. The degassing device 9 is preferably a vacuum extractor. The degassing device 9 is adapted to remove a part of the products of the reactions between the paint particles and the alcoholic paint film decomposition agent, achieved in chamber 5 in presence of the catalyst agent, the stabilizing agent and/or polyolefin. In particular, degraded paint debris, remaining decomposition agent or other low molecular weight products can be extracted from the chamber 5 by the degassing device 9. According to an embodiment, the device 1 further comprises a gear pump 10 and a melt continuous filter 11 connected to the outlet 7. The gear pump 10 is interposed between the melt continuous filter 11 and the outlet 7 for optimizing the efficiency of said filter 11. Thanks to the melt continuous filter 11, the reactive mixture extracted through the outlet 7 and through the gear pump 10 is filtered. This embodiment improves the method by providing in the same device a filtering step, wherein degraded paint particles and any other products of the reactive mixture, or at least a part of them, having a mean diameter larger than diameter comprised between 50 and 100 µm are removed. A conventional melt continuous filter can be used for achieving such a filtering. Therefore, at least a portion of the degraded paint particles is removed from the reactive mixture by the filter 11.

After the reactive mixture has passed through the melt continuous filter 11, a recycled plastic material is obtained, from which the paint is removed, at least in part. The remaining degraded paint particles contained in this recycled plastic material are mainly of a mean diameter lower than a diameter comprised between 50 and 100 µm. Experiments show that the recycled plastic material obtained with the method of the invention, including the aforementioned optimized additives dosing and optimized filtration, has improved properties. The untreated material (for example unfilled Polypropylene Copolymer painted bumper scraps, obtained by crushing the paint-coated plastic article) exhibits 38.6 % in elongation at break. After treatment with the method of the invention, including in particular the aforementioned steps of adding additives, adapted extrusion process and filtration, the recycled material exhibits 98 % in elongation at break. In the same way, the recycled plastic material has also improved impact results at 23°C: 45.97 kJ/m² is observed, versus 34.1 kJ/m² for untreated material. Finally, the usage of the aforementioned additives allows the method to have little impact on the reduction of the tensile modulus: the tensile modulus of the treated material is only reduced to 643 MPa, whereas the tensile modulus of the untreated material was 790 MPa. With all these mechanical properties, the material treated with the method of the invention is suitable for production of new plastic articles such as bumpers.

Regarding aestheticism or impact on paintability of the treated material, some complementary tests showed that the method of the invention, especially when the aforementioned additional steps of filtration and additivation are performed, helps to decontaminate the original material of the article, and especially to suppress paint particles through chemical degradation and mechanical shearing and filtration. For example, a filter pressure test shows that the number of paint particles in the recycled material is reduced. In this test, a difference of pressure is measured between entrance and exit of the filter. This difference of pressure is correlated to the number of paint particles present in the material tested, so its contamination level. This difference of pressure measured shows that the untreated material is much more contaminated with paint particles than the treated one: 127 bar is observed for the untreated material, whereas 18 bar is observed for the treated material.

According to an embodiment, the device 1 further includes an extrusion die 12 through which the recycled material is forced after filtering in the melt continuous filter 11.

According to an embodiment the device 1 comprises a pelletizer 13, or a granulating system, for granulating the reactive mixture, namely the recycled plastic material after it has passed through the extrusion die 12. The recycled plastic material is produced so as to be easily exploited in further purpose.

Instead of the extruder 3 described above, a compounder, a mixer, or a kneader may be used, with appropriate adaptation to the present method for recycling the article. The steps of the method are performed in a single compounder, mixer, extruder or kneader, so that performing such a method requires little space. Additionally, the reactions for degrading the paint particles are performed inside the closed chamber 5 so that the method is safe and less noxious for the operators.

Alternatively to a main screw 4, the device 1 can be provided with a single screw, or two single screws, or two twin screws, or one single screw then one twin screws, in series with a pre-filter interposed in between, a twin screw, mixing rollers or any equivalent mixing device which is adapted for kneading and mixing the raw particles and the reactive mixture. It is to be understood that various combination of screws can be implemented within the scope of the invention, depending on the application.

Optionally, the recycled plastic material can be rinsed, for example with water, after passing through the melt continuous filter 11, or the reactive mixture can be rinsed after passing through the outlet 7.

According to another embodiment, the device 1 includes a second chamber provided with a second internal screw inside of it. This second chamber is arranged between the outlet 7 and the gear pump 10 for further melting and kneading the reactive mixture before it is filtered in the melt continuous filter 11. More paint film decomposition agent, catalyst agents or stabilizers may be added to the reactive mixture in this second chamber. This second chamber can alternatively be used for rinsing the reactive mixture.

The alcoholic paint film decomposition agent and the catalyst agents are preferably chosen to have at least some of the following features: not corrosive, not harmful, not toxic and in solid form at room temperature. Consequently, they are safe to use, easy to handle, and with relatively low impact on the environment. Thus, the costs for processing the alcoholic paint film decomposition agent and the catalyst agents before and after use in the method are particularly low.

Advantageously, the method allows obtaining a recycled plastic material ready to use without requiring the addition of a virgin plastic material. Consequently, no virgin plastic material is added to the reactive mixture or to the raw particles during the method described above.

The features of the different embodiments and alternative embodiments of the invention described here-above can be combined together to generate new embodiments of the invention.

## Claims

1. Method for recycling a paint-coated plastic article and for obtaining a recycled plastic material from which the paint is at least in part removed, said paint-coated article being made of plastic material and being coated at least in part with paint, the method comprising steps of:
a) Crushing the article for forming raw particles, at least some of which containing a portion of the paint;
b) Melting and kneading the raw particles; and
b1) Blending a paint film decomposition agent with the raw particles, during step b), for forming a reactive mixture while the raw particles are being melted and kneaded, at least a portion of the paint being degraded into degraded paint particles by the paint film decomposition agent in the reactive mixture,
the method being **characterized in that** the paint film decomposition agent is a solid alcoholic paint film decomposition agent.

2. Method according to claim 1, **characterized in that** steps b) and b1) are performed in a single compounder, mixer, extruder (3) or kneader.

3. Method according to any one of claims 1 or 2, **characterized in that** it further comprises a step d), subsequent to step b), of filtering the reactive mixture for removing at least a portion of the degraded paint particles from the plastic material.

4. Method according to claim 3, **characterized in that** step d) consists in filtering the reactive mixture for removing at least a part of degraded paint particles having a mean diameter larger than a diameter comprised between 50 and 100 µm.

5. Method according to any one of claims 1 to 4, **characterized in that** it further comprises a step e), subsequent to step b), of granulating the reactive mixture.

6. Method according to any one of claims 1 to 5, **characterized in that** during step b), the reactive mixture is submitted to a processing temperature higher than 130°C.

7. Method according to any one of claims 1 to 6, **characterized in that** the alcoholic paint film decomposition agent is chosen to be in solid form at room temperature, and to become liquid during step b).

8. Method according to any one of claims 1 to 7, **characterized in that** the reactive mixture includes between 1 to 6 % in weight, of the solid alcoholic paint film decomposition agent at the beginning of step b1).

9. Method according to any one of claims 1 to 8, **characterized in that** the solid alcoholic paint film decomposition agent includes at least one of the following: di-trimethylolpropane, sorbitol, 1,6-hexanediol, trimethylolpropane and pentaerythritol.

10. Method according to any one of claims 1 to 9, **characterized in that** it further comprises a step b2) of mixing a catalyst agent with the reactive mixture, before or during step b).

11. Method according to claim 10, **characterized in that** the catalyst agent includes at least one of the following: zinc acetate, preferably dihydrate, magnesium acetate, preferably tetrahydrate, potassium acetate, tin(II) 2-ethylhexanoate and sodium acetate.

12. Method according to claim 10 or 11, **characterized in that** subsequently to step b2), the reactive mixture includes between 0.1 to 0.75 % in weight, of catalyst agent.

13. Method according to any one of claims 1 to 12, **characterized in that** step b) further includes a step b3) of mixing a stabilizing agent or polyolefin, or stabilizing agent and polyolefin to the reactive mixture before or during step b).

14. Method according to any one of claims 1 to 13, **characterized in that** the plastic material of the paint-coated article is mainly made of polypropylene.

15. Method according to any one of the preceding claims 1 to 14, **characterized in that** the method comprises a step of:
c) obtaining, by means of step b1), a recycled plastic material from which the paint is at least in part removed.

## Patentansprüche

1. Verfahren zum Recyceln eines farbbeschichteten Kunststoffartikels und zum Erhalten eines recycelten Kunststoffmaterials, von dem die Farbe zumindest teilweise entfernt ist, wobei der farbbeschichtete Artikel aus einem Kunststoffmaterial hergestellt ist und zumindest teilweise mit Farbe beschichtet ist, wobei das Verfahren die folgenden Schritte aufweist:
a) Zerkleinern des Artikels zum Ausbilden von Rohpartikeln, von denen zumindest einige einen Teil der Farbe enthalten,
b) Schmelzen und Durchkneten der Rohpartikel, und b1) Vermischen eines Farbfilm-Zersetzungsmittels mit den Rohpartikeln während des Schrittes b) zum Ausbilden einer reaktiven Mischung, während die Rohpartikel geschmolzen und geknetet werden, wobei zumindest ein Teil der Farbe durch das Farbfilm-Zersetzungsmittel in der reaktiven Mischung in zerlegte Farbpartikel zerlegt wird,
wobei das Verfahren **dadurch gekennzeichnet ist, dass** das Farbfilm-Zersetzungsmittel ein festes alkoholisches Farbfilm-Zersetzungsmittel ist.

2. Verfahren gemäß Anspruch 1, **dadurch gekennzeichnet, dass** die Schritte b) und b1) in einem einzigen Compounder, Mischer, Extruder (3) oder Kneter durchgeführt werden.

3. Verfahren gemäß irgendeinem der Ansprüche 1 oder 2, **dadurch gekennzeichnet, dass** es ferner einen Schritt d) nach Schritt b) aufweist, zum Filtern der reaktiven Mischung zum Entfernen von zumindest einem Teil der zerlegten Farbpartikel aus dem Kunststoffmaterial.

4. Verfahren gemäß Anspruch 3, **dadurch gekennzeichnet, dass** der Schritt d) aus einem Filtern der reaktiven Mischung besteht, zum Entfernen von zumindest einem Teil von zerlegten Farbpartikeln, die einen mittleren Durchmesser haben, der größer als ein Durchmesser ist, der zwischen 50 und 100 µm beträgt.

5. Verfahren gemäß irgendeinem der Ansprüche 1 bis 4, **dadurch gekennzeichnet, dass** es ferner einen Schritt e) nach Schritt b) zum Granulieren der reaktiven Mischung aufweist.

6. Verfahren gemäß irgendeinem der Ansprüche 1 bis 5, **dadurch gekennzeichnet, dass** die reaktive Mischung während des Schrittes b) einer Verarbeitungstemperatur von größer als 130°C unterzogen wird.

7. Verfahren gemäß irgendeinem der Ansprüche 1 bis 6, **dadurch gekennzeichnet, dass** das alkoholische Farbfilm-Zersetzungsmittel ausgewählt wird, um bei Raumtemperatur in Festkörperform zu sein und während des Schrittes b) flüssig zu werden.

8. Verfahren gemäß irgendeinem der Ansprüche 1 bis 7, **dadurch gekennzeichnet, dass** die reaktive Mischung zu Beginn des Schrittes b1) zwischen 1 bis 6 Gew.-% des festen alkoholischen Farbfilm-Zersetzungsmittels enthält.

9. Verfahren gemäß irgendeinem der Ansprüche 1 bis 8, **dadurch gekennzeichnet, dass** das feste alkoholische Farbfilm-Zersetzungsmittel mindestens eines von den Folgenden enthält: Di-trimethylolpropan, Sorbitol, 1,6-Hexandiol, Trimethylolpropan und Pentaerythrit.

10. Verfahren gemäß irgendeinem der Ansprüche 1 bis 9, **dadurch gekennzeichnet, dass** es ferner einen Schritt b2) des Mischens eines Katalysatormittels mit der reaktiven Mischung vor oder während des Schrittes b) aufweist.

11. Verfahren gemäß Anspruch 10, **dadurch gekennzeichnet, dass** das Katalysatormittel mindestens eines von den Folgenden enthält: Zinkacetat, vorzugsweise Dihydrat, Magnesiumacetat, vorzugsweise Tetrahydrat, Kaliumacetat, Zinn(II)-2-ethylhexanoat und Natriumacetat.

12. Verfahren gemäß Anspruch 10 oder 11, **dadurch gekennzeichnet, dass** die reaktive Mischung nach dem Schritt b2) zwischen 0,1 bis 0,75 Gew.-% des Katalysatormittels enthält.

13. Verfahren gemäß irgendeinem der Ansprüche 1 bis 12, **dadurch gekennzeichnet, dass** der Schritt b) ferner einen Schritt b3) des Mischens eines Stabilisierungsmittels oder Polyolefins oder eines Stabilisierungsmittels und Polyolefins mit der reaktiven Mischung vor oder während des Schrittes b) aufweist.

14. Verfahren gemäß irgendeinem der Ansprüche 1 bis 13, **dadurch gekennzeichnet, dass** das Kunststoffmaterial des farbbeschichteten Artikels hauptsächlich aus Polypropylen hergestellt ist.

15. Verfahren gemäß irgendeinem der vorhergehenden Ansprüche 1 bis 14, **dadurch gekennzeichnet, dass** das Verfahren ferner einen folgenden Schritt aufweist:
c) Erhalten, mittels des Schrittes b1), eines recycelten Kunststoffmaterials, aus dem die Farbe zumindest teilweise entfernt ist.

## Revendications

1. Procédé de recyclage d'un article en plastique enduit de peinture et d'obtention d'une matière plastique recyclée de laquelle la peinture est au moins en partie éliminée, ledit article enduit de peinture étant constitué de matière plastique et étant enduit au moins en partie de peinture, le procédé comprenant les étapes de :
a) broyage de l'article pour former des particules brutes, au moins certaines d'entre elles contenant une partie de la peinture ;
b) fusion et malaxage des particules brutes ; et
b1) mélangeage d'un agent de décomposition de film de peinture avec les particules brutes, pendant l'étape b), pour former un mélange réactif alors que les particules brutes sont fondues et malaxées, au moins une partie de la peinture étant dégradée en particules de peinture dégradées par l'agent de décomposition de film de peinture dans le mélange réactif,
le procédé étant **caractérisé en ce que** l'agent de décomposition de film de peinture est un agent de décomposition de film de peinture alcoolique solide.

2. Procédé selon la revendication 1, **caractérisé en ce que** les étapes b) et b1) sont effectuées dans un seul mélangeur, un seul mixeur, une seule extrudeuse (3) ou un seul malaxeur.

3. Procédé selon l'une quelconque des revendications 1 ou 2, **caractérisé en ce qu'**il comprend en outre une étape d), suite à l'étape b), de filtrage du mélange réactif pour éliminer au moins une partie des particules de peinture dégradées de la matière plastique.

4. Procédé selon la revendication 3, **caractérisé en ce que** l'étape d) consiste à filtrer le mélange réactif pour éliminer au moins une partie des particules de peinture dégradées ayant un diamètre moyen supérieur à un diamètre compris entre 50 et 100 µm.

5. Procédé selon l'une quelconque des revendications 1 à 4, **caractérisé en ce qu'**il comprend en outre une étape e), suite à l'étape b), de granulation du mélange réactif.

6. Procédé selon l'une quelconque des revendications 1 à 5, **caractérisé en ce que** pendant l'étape b), le mélange de réaction est soumis à une température de traitement supérieure à 130 °C.

7. Procédé selon l'une quelconque des revendications 1 à 6, **caractérisé en ce que** l'agent de décomposition de film de peinture alcoolique est choisi pour être sous forme solide à température ambiante, et pour devenir liquide pendant l'étape b).

8. Procédé selon l'une quelconque des revendications 1 à 7, **caractérisé en ce que** le mélange réactif comporte entre 1 à 6 % en poids de l'agent de décomposition de film de peinture alcoolique solide au début de l'étape b1).

9. Procédé selon l'une quelconque des revendications 1 à 8, **caractérisé en ce que** l'agent de décomposition de film de peinture alcoolique solide comporte au moins un des éléments suivants : di-triméthylolpropane, sorbitol, 1,5-hexanediol, triméthylolpropane et pentaérythritol.

10. Procédé selon l'une quelconque des revendications 1 à 9, **caractérisé en ce qu'**il comprend en outre une étape b2) de mélange d'un agent catalyseur avec le mélange réactif, avant ou pendant l'étape b).

11. Procédé selon la revendication 10, **caractérisé en ce que** l'agent catalyseur comporte au moins un des éléments suivants : acétate de zinc, de préférence dihydraté, acétate de magnésium, de préférence tétrahydraté, acétate de potassium, 2-éthylhexanoate d'étain(II) et acétate de sodium.

12. Procédé selon la revendication 10 ou 11, **caractérisé en ce que** suite à l'étape b2), le mélange réactif comporte entre 0,1 et 0,75 % en poids d'agent catalyseur.

13. Procédé selon l'une quelconque des revendications 1 à 12, **caractérisé en ce que** l'étape b) comporte en outre une étape b3) de mélange d'un agent de stabilisation ou de polyoléfine, ou d'un agent de stabilisation et de polyoléfine, au mélange réactif avant ou pendant l'étape b).

14. Procédé selon l'une quelconque des revendications 1 à 13, **caractérisé en ce que** la matière plastique de l'article enduit de peinture est constituée principalement de polypropylène.

15. Procédé selon l'une quelconque des revendications 1 à 14, **caractérisé en ce que** le procédé comprend une étape de :
c) obtention, au moyen de l'étape b1), d'une matière plastique recyclée de laquelle la peinture est au moins en partie éliminée.
